# EUROPÄISCHE PATENTSCHRIFT

(11) **EP 0 753 931 B1**
(45) Veröffentlichungstag und Bekanntmachung des Hinweises auf die Patenterteilung: **15.04.1998**
(21) Anmeldenummer: 96250148.2
(22) Anmeldetag: 04.07.1996
(51) Int. Cl.: H02K 23/66, H02K 23/20

(54) **Vorrichtung zur Erfassung der Drehzahl, Drehrichtung und/oder Drehwinkelstellung eines Kommutatormotors**
Device for measuring the speed of rotation, the rotation direction and/or the rotation angle position of a commutator motor
Dispositif pour la mesure de la vitesse de rotation, du sens de rotation et/ou la position angulaire d'un moteur à collecteur

(30) Priorität: 12.07.1995 DE 19526820
(43) Veröffentlichungstag der Anmeldung: 15.01.1997
(73) Patentinhaber: Brose Fahrzeugteile GmbH & Co. KG, 96450 Coburg (DE)
(72) Erfinder: Sesselmann, Helmut, Dr., 96523 Steinach (DE); Heinrich, Peter, 98553 Hinternah (DE)
(74) Vertreter: Müller, Wolfram Hubertus, Dipl.-Phys.

(56) Entgegenhaltungen:
- EP-A- 0 359 855
- DE-A- 4 229 045
- US-A- 4 025 808
- PATENT ABSTRACTS OF JAPAN vol. 16, no. 513 (E-1283), 22.Oktober 1992 & JP-A-04 190658 (RIKEN CORP), 9.Juli 1992,

## Beschreibung

Die Erfindung betrifft eine Vorrichtung zur Erfassung der Drehzahl, Drehrichtung und/oder Drehwinkelstellung eines Kommutatormotors nach dem Oberbegriff des Anspruchs 1.

Über die Erfassung der Drehzahl, Drehrichtung und/oder Drehwinkelstellung eines Elektromotors sind in eindeutiger Weise die Position und Bewegungsrichtung sowie dynamische Kenngrößen einer durch einen Elektromotor angetriebenen Verstellvorrichtung erfaßbar, etwa einer elektrisch verstellbaren Fensterscheibe oder eines Schiebedachs in Kraftfahrzeugen. Dabei betrifft die Erfassung dynamischer Kenngrößen insbesondere die Erfassung von Geschwindigkeits- oder Beschleunigungswerten.

Aus der DE 42 29 045 A1 ist ein Kommutatormotor bekannt, bei dem zur Erfassung der Drehzahl, Drehrichtung und/oder Drehwinkelstellung mindestens eine im wesentlichen parallel zum Kommutator verlaufende, elektrisch leitfähige und mit mindestens einer Lamelle des Kommutators verbundene Abtastspur vorgesehen ist, deren Länge größer als die Kommutatorteilung ist. Der Abtastspur ist eine zusätzliche Bürste zugeordnet. Über eine Differenzspannungsmessung zwischen der Abstastspur und den Lamellen wird ein inkrementierender oder dekrementierender Spannungsverlauf erfaßt (Ripple-Counter).

Bei dem bekannten Kommutatormotor ist nachteilig, daß zusätzlich zu den Kommutatorlamellen mindestens eine zusätzliche Abtastspur erforderlich ist. Dies erfordert eine spezielle und eigene Ausgestaltung des Kommutators. Auch wird eine Auswerteinrichtung benötigt, die den inkrementierenden oder dekrementierenden Verlauf der erfaßten Spannung auswertet.

Darüberhinaus ist die Auswertung der Signale bei dem bekannten Kommutatormotor schwierig, da den Nutzsignalen durch Bürstenfeuer, Induktionsspannungen und Polwendungsstörungen Störsignale überlagert sind. Auch verschwinden die Nutzsignale schnell, wenn die Ansteuerung des Kommutatormotors beendet wird und keine Lastspannung mehr an den Bürsten anliegt.

In JP-A-04190658 wird ein Kommutatormotor mit zwei Lastbürsten B+, B- sowie zwei Sensorbürsten BA, BB offenbart. Die Sensorbürsten BA, BB sind an die Stromversorgung der Lastbürsten B+, B- gekoppelt. Bei Drehung des Kommutatormotors wird intermittierend eine elektrische Verbindung zwischen der jeweiligen Sensorbürste BA, BB und der zugehörigen Versorgungsbürste B+, B- hergestellt. An den beiden Sensorbürsten BA, BB werden dann zueinander phasenverschobene Sensorsignale abgenommen und zur Erfassung der Drehzahl und Drehrichtung ausgewertet.

Eine Erfassung von Nutzsignalen zur Bestimmung der Drehzahl, Drehrichtung und/oder Drehwinkelstellung eines Elektromotors mittels Hallsensoren, magnetoresistiven Sensoren, Lichtschranken etc. führt zwar zu relativ guten Signalen, ist durch den erforderlichen hohen konstruktiven und apparativen Aufwand jedoch relativ teuer.

Der Erfindung liegt die Aufgabe zu Grunde, eine Vorrichtung zur Erfassung der Drehzahl, Drehrichtung und/oder Drehwinkelstellung eines Kommutatormotors zur Verfügung zu stellen, die sich durch einen einfachen Aufbau auszeichnet und dabei leicht auszuwertende Nutzsignale liefert.

Diese Aufgabe wird erfindungsgemäß durch eine Vorrichtung mit den Merkmalen des Anspruchs 1 gelöst.

Die erfindungsgemäße Lösung stellt zwei gegeneinander phasenverschobene, an den Sensorbürsten anliegende Sensorsignale zur Verfügung, die zur Erkennung der Drehzahl und Drehrichtung ausgewertet werden. Hierzu sind mindestens zwei elektrische Kreise vorgesehen, die durch mindestens zwei Sensorbürsten und mindestens eine Versorgungsbürste gebildet werden. In jedem elektrischen Kreis stellen bei Drehung des Kommutatormotors die Kommutatorlamellen intermittierend eine elektrische Verbindung zwischen der Sensorbürste und der Versorgungsbürste her und erzeugen dabei ein Sensorsignal. Da die elektrische Verbindung zwischen der Sensorbürste und der Versorgungsbürste durch die Kommutatorlamellen in jedem elektrischen Kreis zeitversetzt erfolgt, werden an den jeweiligen Sensorbürsten phasenverschobene Signale abgenommen.

Eine Veränderung des Kommutators ist bei der erfindungsgemäßen Lösung nicht unbedingt erforderlich. Die zusätzlichen Sensorbürsten sind in ihrer Art ohnehin am Elektromotor vorhandene Elemente, die sich während der üblichen Bürstenhaltermontage ohne weiteres montieren lassen. Sie bestehen vorzugsweise aus demselben Material wie die Lastbürsten und sind einfach und kostengünstig herzustellen. Weitere Teile sind zur Nutzsignalerzeugung nicht erforderlich, so daß eine einfache und kostengünstige Lösung vorliegt.

Die Sensorbürsten und die entsprechenden elektrischen Kreise werden durch einen vom Laststrom für die Lastbürsten getrennten Stromkreis versorgt. Durch die damit bewirkte elektrische Entkopplung von Lastbereich und Sensorbereich des Kommutators wird erreicht, daß Störungen durch Induktionsspannungen in den Ankerwicklungen und durch Bürstenfeuer vom auszuwertendem Sensorsignal ferngehalten werden.

Weiter wird durch eine Entkoppelung von Last- und Sensorbereich erreicht, daß eine Signalerfassung auch im Generatorbetrieb erfolgen kann. Auch wenn der Elektromotor nicht mehr angesteuert wird, erfolgt über den Signalstromkreis eine Erfassung einer weiteren Bewegung des Motors, beispielsweise beim Absenken einer treibenden Last und insbesondere auch durch trägheitsbedingtes Nachlaufen beim Abschalten des Motors. Die genaue Erfassung der Motorbewegung ist für eine genaue Bestimmung der Position eines vom Elektromotor angetriebenen Verstellelements wichtig.

In einer bevorzugten Ausgestaltung ist zur Entkopplung von Lastbereich und Sensorbereich zusätzlich zu den Lastbürsten mindestens eine Versorgungsbürste vorgesehen, über die die Sensorbürsten in Abhängigkeit von der Drehwinkelstellung des Kommutators mit einer Spannung beaufschlagt werden. Eine Abhängigkeit von der Drehwinkelstellung des Kommutators bzw. der Stellung der Kommutatorlamellen liegt dabei insofern vor, als die an der Versorgungsbürste anliegende Spannung nur dann jeweils auf eine Sensorbürste übertragen wird, wenn Sensorbürste und Versorgungsbürste die gleiche Kommutatorlamelle schleifen. Dies ist bei Drehung des Kommutatormotors intermittierend der Fall. Der sich daraus für jede Sensorbürste ergebende rechteckige Spannungsverlauf wird ausgewertet. Die Signalverläufe der jeweiligen Sensorbürsten sind phasenverschoben, so daß eine Drehrichtungserkennung möglich ist.

In einer vorteilhaften Ausgestaltung ist vorgesehen, daß jede Sensorbürste über eine eigene, der Sensorbürste zugeordnete Versorgungsbürste mit einer Spannung beaufschlagt ist. Dies bietet sich inbesondere bei einer feinen Kommutatorteilung an, da diese Lösung kleinere Bürsten ermöglicht, die auch bei einer feinen Kommutatorteilung jeweils nur eine Lamelle kontaktieren.

In einer bevorzugten Ausführungsform ist der Kommutator in einen Lastbereich, an dem die Lastbürsten schleifen, und einen Sensorbereich, an dem die Sensorbürsten schleifen, unterteilt. Dabei werden die Sensorbürsten mit Vorteil durch einen eigenen, vom Laststrom für die Lastbürsten getrennten Stromkreis versorgt, so daß eine elektrische Entkopplung von Lastbereich und Sensorbereich des Kommutators vorliegt.

Mit Vorteil sind Lastbereich und Sensorbereich des Kommutators axial hintereinander angeordnet. Dabei sind die Kommutatorlamellen bevorzugt verlängert ausgebildet und etwa durch einen Einstich in zwei elektrisch getrennte Bereiche unterteilt. Durch diese Anordnung ist ausreichend Platz geschaffen, die Sensorbürsten in einem abgekoppelten Stromkreis am Kollektor anzuordnen.

Eine weitere Ausführungsform sieht vor, daß die Lastbürste bzw. die Lastbürsten im Inneren eines als Hohlzylinder ausgestalteten Kommutators angeordnet sind und von innen an den Lamellen des Kommutators schleifen. Dies führt zu einer weiteren Platzersparnis und ist insbesondere bei großen Kommutatormotoren von Vorteil.

Alternativ können die Sensorbürsten auch an der Stirnseite der Lamellen angeordnet sein, wobei der Kontakt zwischen Lamelle und Sensorbürste jeweils über die radial gerichtete Stirnfläche der Lamelle erfolgt. Dies erlaubt eine kompaktere Anordnung der Sensorbürsten.

Die Sensorbürsten und die jeweilige Versorgungsbürste weisen in Umfangsrichtung einen Abstand auf, der kleiner oder gleich der Breite einer Lamelle des Kommutators ist. Hierdurch wird die Erzeugung eines intermittierenden Signals gewährleistet.

Weitere vorteilhafte und bevorzugte Ausgestaltungen der Erfindung sind in den Unteransprüchen gekennzeichnet.

Die Erfindung wird nachfolgend unter Bezugnahme auf die Figuren der Zeichnung an mehreren Ausführungsbeispielen näher beschrieben. Es zeigen:
- Fig. 1: eine Querschnittsansicht eines Kommutators, an dem zwei Lastbürsten, zwei Sensorbürsten und eine Versorgungsbürste anliegen;
- Fig. 2: eine schematische Darstellung der Anordnung der Fig. 1;
- Fig. 3: ein Schaltbild, das die Verschaltung der Sensorbürsten bei dem Ausführungsbeispiel der Fig.1 und 2 darstellt;
- Fig. 4: eine zeitliche Darstellung der an den Sensorbürsten gemäß Fig. 1 und Fig. 2 abgegriffenen Spannungsverläufe bei Rechts- und Linkslauf des Kommutatormotors;
- Fig. 5: eine Querschnittsansicht eines Kommutators mit feiner Kommutatorteilung, an dem zwei Lastbürsten, zwei Sensorbürsten und zwei Versorgungsbürsten anliegen;
- Fig. 8: eine schematische Darstellung eines Kommutators, bei dem die Sensorbürsten an der Stirnseite der Lamellen angeordnet sind;
- Fig. 10: eine schematische Darstellung eines Modulbausteins zur Aufnahme eines Kommutators.

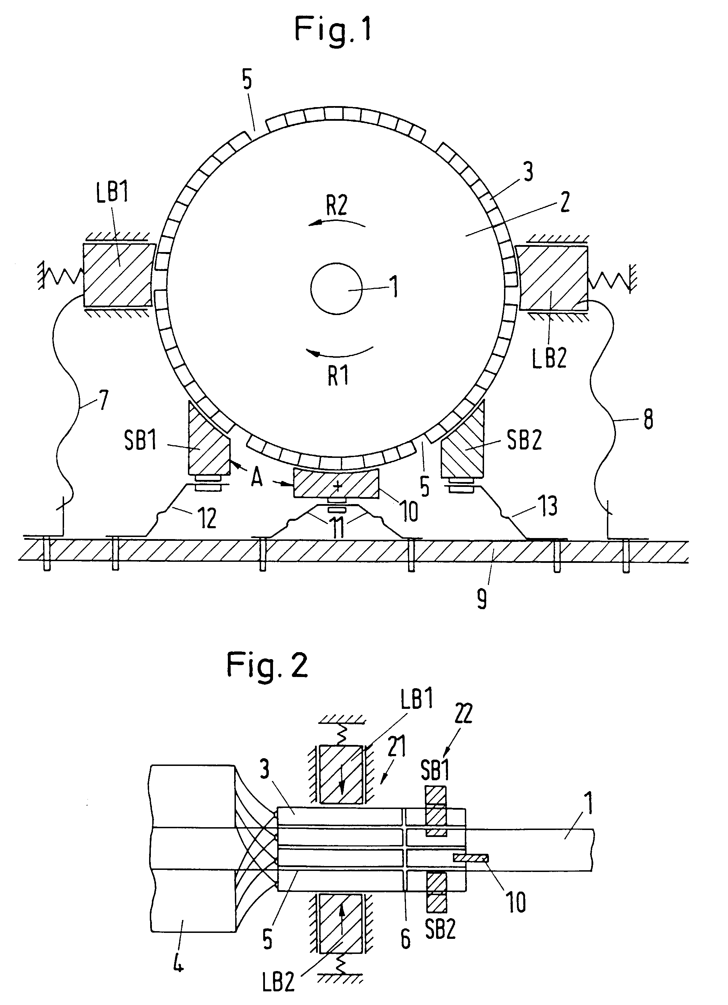

Gemäß Fig. 1 und Fig. 2 ist auf einer Motorwelle 1 eines als Gleichstrommotor ausgebildeten Elektromotors ein Kommutator 2 angeordnet. Am Umfang des Kommutators erstrecken sich in axialer Richtung mit einer Kupferschicht versehene Lamellen 3. An eine Lamelle 3 ist gemäß Fig. 2 jeweils ein Ende zweier Teilspulen der Ankerwicklung 4 des Elektromotors angeschlossen. Die einzelnen Lamellen 3 sind durch Nuten 5 elektrisch voneinander getrennt. Diese Nuten 5 sind mit einem geeigneten Füllstoff ausgefüllt, um eine Verschmutzung der Nuten 5 und damit eine Störung eines auszuwertenden Signals zu vermeiden.

Der Laststrom wird den Lamellen 3 des Kommutators 2 über vorzugsweise aus Graphit bestehende, gegenüberliegende, federbelastete Lastbürsten LB1, LB2 zugeführt. Die Lastbürsten sind in einem in Figur 10 dargestellten, den Kommutator 2 aufnehmenden Modulbaustein 16 gehaltert.

Der Kommutator 2 ist gemäß Fig. 2 in zwei axial hintereinander angeordnete Kommutatorbereiche 21, 22 geteilt. Dabei handelt es sich um einen Lastbereich 21 für die Lastbürsten LB1, LB2 zur Übertragung des Motorstroms und um einen Signalbereich zur Erfassung eines auszuwertenden Sensorsignals. Die Lamellen 3 sind besonders lang ausgeführt und weisen zur Trennung des Kommutators in einen Lastbereich 21 und einen Signalbereich 22 einen Einschnitt 6 auf. Die beiden axial hintereinander angeordneten Kommutatorbereiche 21, 22 sind somit elektrisch entkoppelt.

Vorliegend ist die Lamellengeometrie von Lastbereich 21 und Sensorbereich 22 identisch. Alternativ ist jedoch denkbar, daß sich die Lamellengeometrien von Lastbereich 21 und Sensorbereich 22 unterscheiden, etwa im Sensorbereich 22 für eine bessere Auflösung eine Lamellenverdopplung stattfindet oder die Lamellen im Sensorbereich 22 zwecks Platzersparnis einen geringeren radialen Abstand zur Motorwelle 1 besitzen.

Die Stromversorgung der Lastbürsten LB1, LB2 erfolgt über Stromleitungen 7, 8, die mit einer Leiterplatte 9 verbunden sind. Die Leiterplatte 9 dient der Stromversorgung sämtlicher elektrischer Elemente des Kommutators 2.

Am Umfang des Signalbereichs 22 des Kommutators 6 befinden sich zwei Sensorbürsten SB1, SB2. Zwischen den Sensorbürsten befindet sich eine Versorgungsbürste 10, die über federnde Anschlüsse 11 mit einer positiven Spannung beaufschlagt ist. Die Sensorbürsten SB1, SB2 sind über ebenfalls federnde Leitungen 12, 13 mit der Leitungsplatte 9 verbunden. Der Abstand A zwischen der Versorgungsbürste 10 und den in Umfangsrichtung benachbarten Sensorbürsten SB1, SB2 ist kleiner als die Breite einer Lamelle 3, jedoch größer als die Breite einer Nut 5. Daraus ergibt sich, daß eine Sensorbürste SB1, SB2 und die Versorgungsbürste 10 jeweils teilweise an derselben Lamelle 3 schleifen, so daß intermittierend an den Sensorbürsten SB1, SB2 die an der Versorgungsbürste 10 anliegende Spannung anliegt.

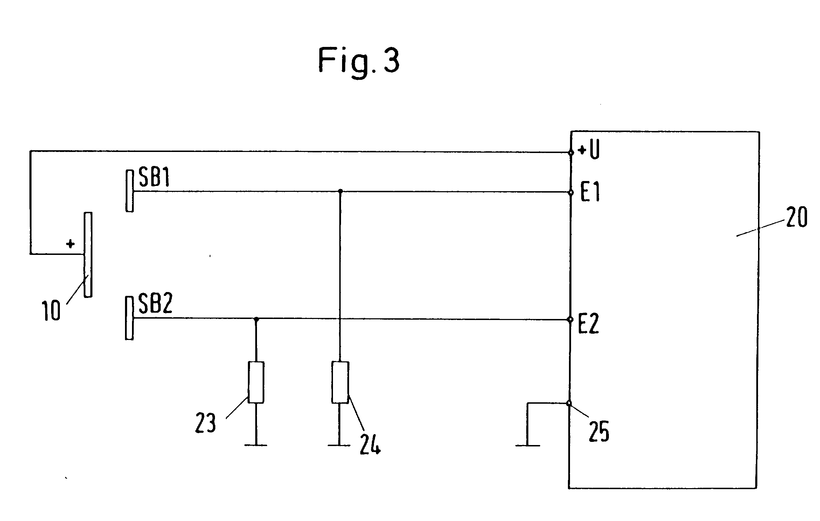

Die Verschaltung der Sensorbürsten SB1, SB2 und der Versorgungsbürste 10 ist in Figur 3 dargestellt. Eine Steuerelektronik und Auswerteinheit 20 beaufschlagt die Versorgungsbürste 10 über eine elektrische Leitung mit einer konstanten Spannung. Die an den Sensorbürsten SB1, SB2 anliegenden Signale werden jeweils über entsprechende Leitungen den Eingängen E1, E2 der Steuerelektronik und Auswerteinheit 20 zugeführt, in der eine Auswertung der Signale zur Erkennung der Drehzahl, Drehrichtung und Drehwinkelstellung des Kommutatormotors stattfindet. Widerstände 23, 24 sorgen dabei für ein sauberes, reproduzierbares Nullpotential. Dieses liegt an den Sensorbürsten SB1, SB2 an, sofern die Sensorbürsten SB1, SB2 nicht mit der an der Versorgungsbürste 10 anliegenden Spannung beaufschlagt sind. Die Steuerelektronik und Auswerteinheit 20 ist über einen Anschluß 25 geerdet.

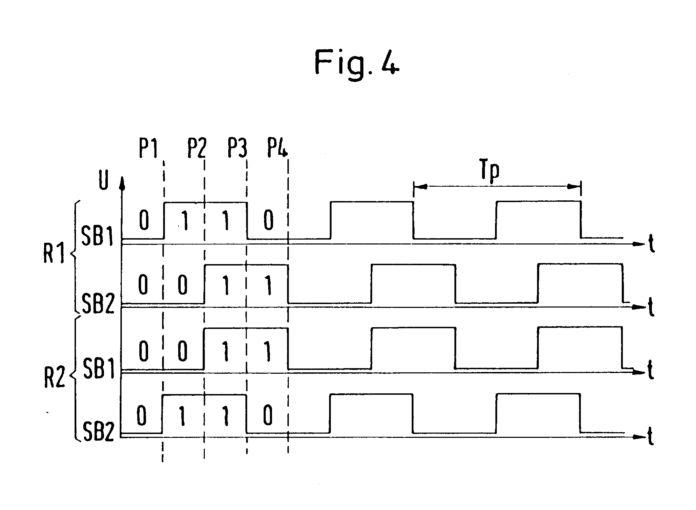

Die resultierenden Spannungsverläufe an den Sensorbürsten SB1, SB2 für einen Rechtslauf R1 bzw. einen Linkslauf R2 des Kommutatormotors sind in Fig. 4 dargestellt. Es sei zunächst der Rechtslauf R1 betrachtet (obere beiden Spannungsverläufe). In der in Fig. 1 gezeigten Stellung befindet sich zwischen Signalbürste 10 und den Sensorbürsten SB1, SB2 jeweils eine elektrisch isolierende Nut 5. Die als mit "1" bezeichnete Spannung an der Versorgungsbürste liegt somit nicht an den Sensorbürsten SB1, SB2 an. An den Sensorbürsten SB1, SB2 liegt keine Spannung an (Wert "0").

Bei geringer Rechtsdrehung des Kommutatormotors (Intervall P2) kontaktieren die Versorgungsbürste 10 und die Sensorbürste SB1 die gleiche Lamelle 3. Die an der Versorgungsbürste 10 angelegte Spannung wird somit auf die Sensorbürste SB1 übertragen. Entsprechend springt die an der Sensorbürste SB1 anliegende Spannung auf "1". Zwischen Versorgungsbürste 10 und Sensorbürste SB2 liegt dagegen weiterhin eine Nut 5, so daß eine elektrische Verbindung nicht vorliegt.

Bei weiterer Rechtsdrehung des Kommutators 2 (Intervall P3) befindet sich die Nut 5 im Bereich der Versorgungsbürste 10, so daß die Spannung der Versorgungsbürste 10 gleichzeitig an zwei Lamellen 3 anliegt. Entsprechend liegt an beiden Signalbürsten SB1, SB2 die Spannung "1" an. Bei weiterer Rechtsdrehung (Intervall P4) werden die Spannungsbürste SB1 und die Versorgungsbürste 10 durch die Nut 5 getrennt, so daß die an der Versorgungsbürste 10 anliegende Spannung nicht mehr auf die Sensorbürste SB1 übertragen wird. Die an der Sensorbürste 1 anliegende Spannung ist dann "0". Dagegen liegt an der Sensorbürste SB2 weiterhin die Spannung "1" an.

In analoger Weise ergibt sich bei Linksdrehung R2 (untere beiden Spannungsverläufe in Fig. 4) ein vertauschter Phasenverlauf. Durch die erfindungsgemäße Anordnung der Signalbürsten SB1, SB2 werden somit zwei phasenverschobene Signale erzeugt, die zur Erkennung der Drehzahl und Drehrichtung gefiltert und verarbeitet werden. Eine Unterscheidung der Drehrichtung R1, R2 wird möglich durch die Feststellung, ob das Signal der Sensorbürste SB1 dem Signal der Sensorbürste SB2 vorauseilt oder umgekehrt.

Der Spannungsverlauf setzt sich aus diskreten Spannungsblöcken zusammen, wobei die Auflösung von der Anzahl der Lamellen 3 abhängt. Je mehr Lamellen 3 vorgesehen sind, also je feiner die Kommutatorteilung ist, desto höher ist die Auflösung.

Die Drehzahl des Kommutatormotors ergibt sich aus dem periodischen Spannungsverlauf, indem in einer Auswerteinheit die Periodendauer erfaßt wird. Der Kehrwert der Periodendauer Tₚ multipliziert mit der Anzahl der Lamellen des Kommutators entspricht dabei der Drehzahl des Kommutatormotors.

Durch die Verwendung getrennter Stromkreise für die Sensorbürsten SB1, SB2 zur Erzeugung der auszuwertenden Signale und für die Lastbürsten LB1, LB2 zur Übertragung des Motorstroms werden Störungen des Sensorsystems vermieden. Durch die vorgenommene Entkoppelung der Stromkreise werden auch an den Lastbürsten LB1, LB2 anliegende Induktionsspannungen der Wicklungen an den Sensorbürsten SB1, SB2 nicht gemessen. Störsignale durch die Lastbürsten, etwa durch Bürstenfeuer und Polwendungsstörungen, entfallen.

Eine Drehzahl- und Drehrichtungserkennung erfolgt auch im Generatorbetrieb, etwa beim Absenken einer treibenden Last und insbesondere durch trägheitsbedingtes Nachlaufen beim Abschalten des Motors, da die Sensorbürsten SB1, SB2 durch einen eigenen Stromkreis versorgt sind. Eine Verstellung des Motors in Generatorbetrieb wird genau erkannt.

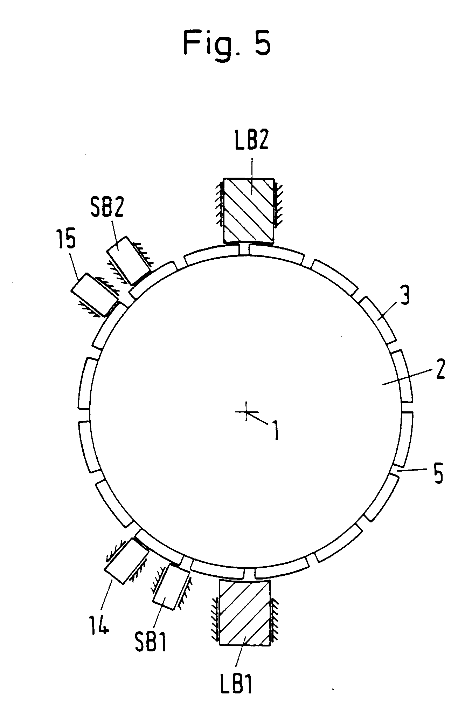

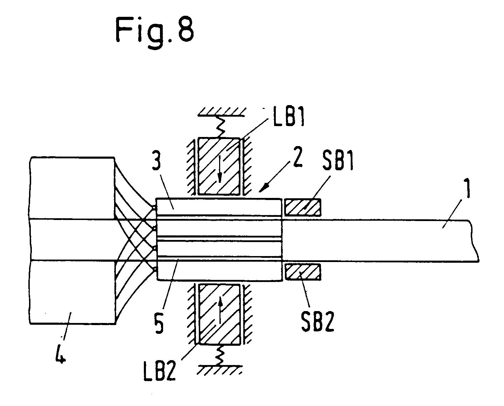

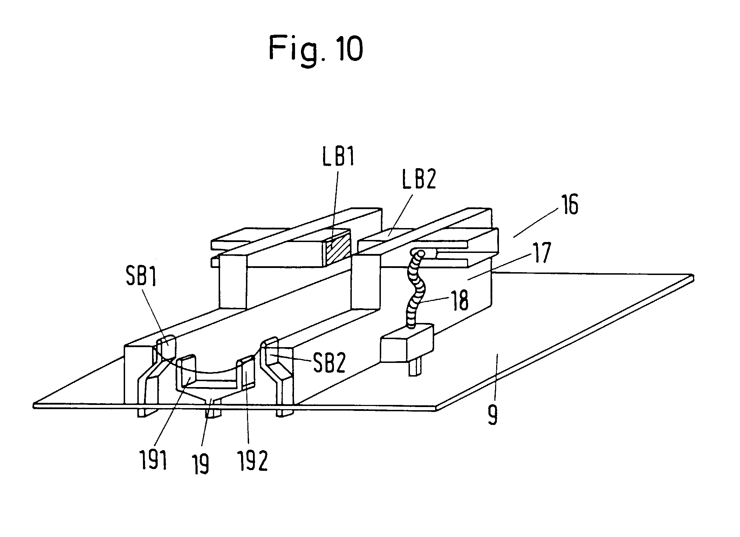

In Fig. 5 ist im Querschnitt eine weitere Anordnung zur Erfassung der Drehzahl und Drehrichtung eines Elektromotors dargestellt. Der dargestellte Kommutator 2 weist eine feine Teilung auf. Im Unterschied zu Fig. 1 und Fig. 2 sind zwei Versorgungsbürsten 14, 15 vorgesehen, die jeweils einer Sensorbürste SB1, SB2 zugeordnet sind. Die Sensorbürsten SB1, SB2 und die Versorgungsbürsten 14, 15 sind sehr klein ausgeführt, so daß trotz der feinen Kommutatorteilung die Bürsten schmaler als die Lamellen 3 sind. Durch die große Anzahl von Lamellen 3 ermöglicht diese Ausführungsform eine hohe Auflösung der Drehzahl und Drehwinkelstellung und damit eine genaue Erfassung der Position eines Verstellelements.

Der Abstand zwischen Sensorbürste SB1, SB2 und Versorgungsbürste 14, 15 ist kleiner als die Kommutatorteilung, so daß ein intermittierender Spannungsverlauf entsteht. Es werden phasenverschobene Spannungsverläufe erzeugt, die bei Rechts- bzw. Linksdrehung des Motors einander voraus- oder nacheilen. Die Erzeugung der Spannungsverläufe erfolgt wie in Bezug auf Fig. 4 beschrieben.

In weiteren Ausführungsformen erfolgt eine stirnseitige Anordnung der Sensorbürsten SB1, SB2 an der Stirnseite eines Kommutators, der einen elektrisch vom Lastbereich entkoppelten Sensorbereich aufweist, wobei der Sensorbereich über eine oder mehrere Versorgungsbürsten mit Strom versorgt wird. Es handelt sich dabei um Ausführungsformen, die bis auf die stirnseitige Anordnung der Sensorbürsten der Ausführungsform der Fig. 1 oder verwandten Ausführungsformen entspricht.

In einem anderen Ausführungsbeispiel sind mehrere Sensorbürsten im Inneren eines als Hohlzylinder ausgebildeten Kommutators 2 angeordnet, wobei ein eigener Sensorbereich des Kommutators mit eigener Stromversorgung vorgesehen ist. Dazu könnten beispielsweise zusätzliche Lamellen unterhalb den Lamellen 3 angeordnet sein.

Figur 10 zeigt einen Modulbaustein 16 zur Aufnahme eines Kommutators 2. Ein Kommutator 2 wird dabei in den mittigen Spalt des Modulbausteins 16 eingesetzt. Der Modulbaustein 16 ist auf einer Leiterplatte 9 aufgesteckt, die gleichzeitig die Steuerelektronik und Auswerteinheit 20 (Fig. 3) trägt.

Im hinteren Bereich des Modulbausteins 16 sind zwei Lastbürsten LB1, LB2 federnd in einem Bürstenhalter 17 gehaltert. Über eine Zuleitung 18 erfolgt eine Bestromung der Lastbürsten LB1, LB2. Im vorderen Bereich des Modulbausteins 16 sind in axialem Abstand von den Lastbürsten LB1, LB2 zwei Sensorbürsten SB1, SB2 gehaltert. Zwischen den Sensorbürsten SB1, SB2 ist mittig eine gabelförmige Versorgungsbürste 19 mit zwei angefederten Kontaktschenkeln 191, 192 angeordnet. Die Anordnung der Sensorbürsten SB1, SB2 und der Versorgungsbürste 19 entspricht dabei im wesentlichen der Anordnung der Figuren 1, 2 und 3.

Die Sensorbürsten SB1, SB2 und die Versorgungsbürste 19 sind über entsprechende Kontakte mit der Leiterplatte 9 elektrisch verbunden. Die an den Sensorbürsten SB1, SB2 anliegende Spannung wird als auszuwertendes Signal der Auswertelektronik zugeführt.

## Patentansprüche

1. Vorrichtung zur Erfassung der Drehzahl, Drehrichtung und/oder Drehwinkelstellung eines Kommutatormotors mit zwei Lastbürsten und mindestens zwei zusätzlichen Sensorbürsten, insbesondere für Fensterheber und Schiebedächer in Kraftfahrzeugen, wobei die Sensorbürsten in mindestens zwei elektrischen Kreisen angeordnet sind, die durch die Sensorbürsten (SB1, SB2) und mindestens eine Versorgungsbürste (LB1; LB2; 10; 14, 15) gebildet werden, wobei in jedem elektrischen Kreis bei Drehung des Kommutatormotors die Kommutatorlamellen (3) intermittierend eine elekrische Verbindung zwischen der Sensorbürste (SB1, SB2) und der Versorgungsbürste (LB1; LB2; 10; 14, 15) herstellen und dabei gegeneinander phasenverschobene Sensorsignale erzeugt werden,
**dadurch gekennzeichnet**,
daß die Sensorbürsten (SB1, SB2) und die entsprechenden elektrischen Kreise durch einen vom Laststrom für die Lastbürsten (SB1, LB2) getrennten Stromkreis versorgt werden.

2. Vorrichtung nach Anspruch 1, **dadurch gekennzeichnet**, daß zusätzlich zu den Lastbürsten (LB1, LB2) mindestens eine Versorgungsbürste (10; 14, 15) vorgesehen ist, über die die Sensorbürsten (SB1, SB2) in Abhängigkeit von der Drehwinkelstellung des Kommutators (3) mit einer Spannung beaufschlagt werden.

3. Vorrichtung nach Anspruch 2, **dadurch gekennzeichnet**, daß jeder Sensorbürste (SB1, SB2) eine Versorgungsbürste (14, 15) zugeordnet ist.

4. Vorrichtung nach Anspruch 2 oder 3, **dadurch gekennzeichnet**, daß der Kommutator (2) in einen Lastbereich (21), an dem die Lastbürsten (SB1, LB2) schleifen, und einen Sensorbereich (22), an dem die Sensorbürsten (LB1, SB2) schleifen, unterteilt ist.

5. Vorrichtung nach Anspruch 4, **dadurch gekennzeichnet**, daß die Lamellengeometrie von Lastbereich (21) und Sensorbereich (22) identisch ist.

6. Vorrichtung nach Anspruch 4 oder 5, **dadurch gekennzeichnet**, daß Lastbereich (21) und Sensorbereich (22) des Kommutators (2) axial hintereinander angeordnet sind.

7. Vorrichtung nach Anspruch 6, **dadurch gekennzeichnet**, daß die Kommutatorlamellen (3) verlängert und in elektrisch getrennte Bereiche unterteilt sind.

8. Vorrichtung nach einem der vorangehenden Ansprüche, **dadurch gekennzeichnet**, daß der Kommutator (2) als Hohlzylinder ausgestaltet ist und die Sensorbürsten (SB1, SB2) im Inneren des Hohlzylinders angeordnet sind.

9. Vorrichtung nach einem der vorangehenden Ansprüche, **dadurch gekennzeichnet**, daß die Sensorbürsten (SB1, SB2) an der Stirnseite der Lamellen (3) angeordnet sind.

10. Vorrichtung nach einem der vorangehenden Ansprüche, **dadurch gekennzeichnet**, daß die Sensorbürsten (SB1, SB2) und die Versorgungsbürste (LB1; LB2; 10; 14, 15) in Umfangsrichtung einen Abstand (A) aufweisen, der kleiner oder gleich der Breite einer Lamelle (3) des Kommutators (5) ist.

## Claims

1. Device for detecting the speed, rotary direction and/or rotary angle setting of a commutator motor with two load brushes and at least two additional sensor brushes, more particularly for window regulators and sliding roofs in motor vehicles, wherein the sensor brushes are mounted in at least two electrical circuits which are formed by the sensor brushes (SB1 and SB2) and at least one supply brush (LB1; LB2; 10; 14,15) wherein in each electrical circuit during rotation of the commutator motor the commutator plates (3) intermittently make an electrical connection between the sensor brushes (SB1, SB2) and the supply brush (LB1;LB2;10;14,15) and mutually phase-displaced sensor signals are thereby produced,
characterised in that the sensor brushes (SB1, SB2) and the corresponding electrical circuits are supplied by a supply circuit which is separate from the load current for the load brushes (LB1, LB2).

2. Device according to claim 1 characterised in that in addition to the load brushes (LB1, LB2) at least one supply brush (10;14,15) is provided through which the sensor brushes (SB1, SB2) are biased with a voltage in dependence on the rotary angle position of the commutator (3).

3. Device according to claim 2 characterised in that the supply brush (14,15) is allotted to each sensor brush (SB1, SB2).

4. Device according to claim 2 or 3 characterised in that the commutator (2) is divided into a load area (21) where the load brushes (LB1, LB2) slip and a sensor area (22) where the sensor brushes (SB1,SB2) slip.

5. Device according to claim 4 characterised in that the lamella plate geometry of the load area (21) and sensor area (22) is identical.

6. Device according to claim 4 or 5 characterised in that the load area (21) and sensor area (22) of the commutator (2) are arranged axially one behind the other.

7. Device according to claim 6 characterised in that the commutator lamella plates (3) are lengthened and divided into electrically separate areas.

8. Device according to one of the preceding claims, characterised in that the commutator (2) is formed as a hollow cylinder and the sensor brushes (SB1, SB2) are arranged inside the hollow cylinder.

9. Device according to one of the preceding claims, characterised in that the sensor brushes (SB1, SB2) are mounted on the end side of the lamella plates (3).

10. Device according to one of the preceding claims, characterised in that the sensor brushes (SB1, SB2) and the supply brush (LB1; LB2; 10; 14,15) have in the circumferential direction a spacing (A) which is smaller or equal to the width of one lamella plate (3) of the commutator (5).

## Revendications

1. Dispositif de détection de la vitesse de rotation, du sens de rotation et/ou de la position angulaire d'un moteur à collecteur, comprenant deux balais de charge et au moins deux balais supplémentaires de détection, notamment pour des lève-vitres et des toits ouvrants dans des véhicules automobiles, les balais de détection étant disposés dans au moins deux circuits électriques formés par les balais de détection (SB1, SB2) et par au moins un balai d'alimentation (LB1 ; LB2 ; 10 ; 14, 15), les lamelles (3) du collecteur établissant par intermittence dans chaque circuit électrique, lors d'une rotation du moteur à collecteur, une liaison électrique entre le balai de détection (SB1, SB2) et le balai d'alimentation (LB1 ; LB2 ; 10 ; 14, 15), avec génération simultanée de signaux de détection mutuellement en décalage de phases,
caractérisé par le fait
que les balais de détection (SB1, SB2) et les circuits électriques correspondants sont alimentés par un circuit de courant séparé du courant de charge destiné aux balais de charge (LB1, LB2).

2. Dispositif selon la revendication 1, caractérisé par le fait qu'il est prévu, en plus des balais de charge (LB1, LB2), au moins un balai d'alimentation (10 ; 14, 15) par l'intermédiaire duquel les balais de détection (SB1, SB2) sont sollicités par une tension en fonction de la position angulaire du collecteur (3).

3. Dispositif selon la revendication 2, caractérisé par le fait qu'un balai d'alimentation (14, 15) est affecté à chaque balai de détection (SB1, SB2).

4. Dispositif selon la revendication 2 ou 3, caractérisé par le fait que le collecteur (2) est subdivisé en une zone de charge (21) contre laquelle les balais de charge (LB1, LB2) frottent, et en une zone de détection (22) contre laquelle les balais de détection (SB1, SB2) frottent.

5. Dispositif selon la revendication 4, caractérisé par le fait que la géométrie des lamelles de la zone de charge (21) et de la zone de détection (22) est identique.

6. Dispositif selon la revendication 4 ou 5, caractérisé par le fait que la zone de charge (21) et la zone de détection (22) du collecteur (2) sont agencées en succession axiale.

7. Dispositif selon la revendication 6, caractérisé par le fait que les lamelles (3) du collecteur sont prolongées et sont scindées en des zones séparées électriquement.

8. Dispositif selon l'une des revendications précédentes, caractérisé par le fait que le collecteur (2) est réalisé sous la forme d'un cylindre creux, et les balais de détection (SB1, SB2) sont logés dans l'espace interne du cylindre creux.

9. Dispositif selon l'une des revendications précédentes, caractérisé par le fait que les balais de détection (SB1, SB2) sont placés à la face extrême des lamelles (3).

10. Dispositif selon l'une des revendications précédentes, caractérisé par le fait que les balais de détection (SB1, SB2) et le balai d'alimentation (LB1 ; LB2 ; 10 ; 14, 15) présentent, dans la direction circonférentielle, une distance (A) inférieure ou égale à la largeur d'une lamelle (3) du collecteur (5).
